# EUROPÄISCHE PATENTSCHRIFT

(11) **EP 2 114 627 B1**
(45) Veröffentlichungstag und Bekanntmachung des Hinweises auf die Patenterteilung: **10.11.2010**
(21) Anmeldenummer: 08804565.3
(22) Anmeldetag: 22.09.2008
(51) Int. Cl.: B25J 5/02, B25J 19/06

(54) **LABORSYSTEM MIT EINER TRANSPORTEINRICHTUNG FÜR PROBEN UND EINEM ÜBERWACHUNGSSYSTEM ZUR EINHALTUNG EINES SICHERHEITSABSTANDES**
LABORATORY SYSTEM HAVING A TRANSPORT UNIT FOR SAMPLES AND A MONITORING SYSTEM FOR MAINTAINING A SAFE DISTANCE
SYSTÈME DE LABORATOIRE DOTÉ D'UN DISPOSITIF DE TRANSPORT D'ÉCHANTILLONS ET D'UN SYSTÈME DE SURVEILLANCE SERVANT À RESPECTER UNE DISTANCE DE SÉCURITÉ

(30) Priorität: 10.10.2007 DE 102007048684
(43) Veröffentlichungstag der Anmeldung: 11.11.2009
(73) Patentinhaber: Polysius AG, 59269 Beckum (DE)
(72) Erfinder: TEUTENBERG, Reinhard, 59427 Unna (DE)
(74) Vertreter: Tetzner, Michael
(86) Internationale Anmeldenummer: PCT/EP2008/062639
(87) Internationale Veröffentlichungsnummer: WO 2009/049995

(56) Entgegenhaltungen:
- EP-A- 0 179 252
- EP-A- 0 633 207
- DE-A1- 3 208 901
- DE-A1- 10 344 284

## Beschreibung

Die Erfindung betrifft ein Laborsystem gemäß dem Oberbegriff des Anspruchs 1.

Ein solches Laborsystem ist z.B. aus der EP-A-0 633 207 bekannt.

Aus dem Bereich der Zementherstellung ist ein Laborsystem bekannt, bei dem die verschiedenen Behandlungseinrichtungen um einen in der Mitte angeordneten Roboter angeordnet sind. Der Roboter übernimmt dabei den Transfer der Proben zwischen den Behandlungseinrichtungen und führt die Proben den einzelnen Behandlungseinrichtungen zu. Die Proben werden üblicherweise mittels eines Probenträgers transportiert, bei dem es sich beispielsweise um einen Becher oder einen Stahlring handelt. Das Probenmaterial befindet sich dabei wahlweise lose im Becher oder wird in den Stahlring eingepresst.

Die Dosierung des Probenmaterials aus dem Probenträger (Becher) wird ebenfalls vom Roboter übernommen. Ein derartiger Zentralroboter ist jedoch relativ teuer und für den Menschen aufgrund seiner großen Reichweite und seiner Kinematik (große Kräfte und Beschleunigungen) potentiell gefährlich, sodass ausreichende Sicherheitsabschrankungen erforderlich sind. Außerdem sind die Aufstellungsmöglichkeiten der einzelnen Behandlungseinrichtungen durch die zentrale Anordnung des Roboters begrenzt.

Aus der EP-A-0 633 207 wird ein Laborsystem vorgeschlagen, bei dem der Transport der Proben zu den unterschiedlichen Behandlungseinrichtungen über ein kontinuierlich umlaufendes Transportband erfolgt. Über Stoppvorrichtungen kann das Transportband angehalten werden, um einen Probenträger an einer Behandlungseinrichtung in eine vorgegebene Halteposition zu bringen. Ein der Behandlungseinrichtung zugeordnetes Handhabungsgerät bewirkt dann den Transport eines Probenträger aus der Halteposition heraus zu der jeweiligen Behandlungseinrichtung und zurück.

Wenngleich bei diesem Laborsystem die Anordnung der einzelnen Behandlungseinrichtungen wesentlich variabler ist und auf einen teueren Zentralroboter verzichtet werden kann, ist das System immer noch relativ aufwendig.

Aus der DE 103 44 284 A1 ist eine Vorrichtung zur automatisierten Durchführung von Laborarbeitsschritten bekannt, wobei mindestens eine Station zum automatischen Wechseln von flüssigen Medien in Probebehältern vorgesehen ist.

Aus der Praxis ist weiterhin ein Laborsystem bekannt, bei dem die Proben mit einem selbstfahrenden Roboter transportiert werden, der z.B. mit einem Laserscanner ausgestattet ist, um Hindernissen ausweichen zu können.

Aus der DE 200 06 549 U 1 ist eine Vorrichtung zum automatischen Durchführen von chemischen bzw. biologischen Verfahren in Probengefäßen bekannt. Hierbei werden die Probengefäße über einen Bandförderer zu einer Behandlungseinrichtung transportiert. Dabei werden die von Bandförderer erreichbaren Endstellungen eines Förderschlittens sensorisch überwacht. Über ein im Bereich der Behandlungseinrichtung vorgesehenes Handhabungsgerät erfolgt der Transfer der Probengefäße zwischen Förderschlitten und Behandlungseinrichtung.

In der DE 199 30 019 A1 wird eine Einrichtung zum Steuern des Transports von Reinigungsgut auf einer Transportbahn beschrieben. Die Abstände und die Ausrichtung des Reinigungsgutes auf der Transportbahn werden mit Hilfe einer Kamera und einer Bildverarbeitung überwacht.

Das Steuern einer Fördertechnik mittels rechnergestützter Bilderkennung ist außerdem aus der DE 10 2006 015 689 A1, der DE 10 2006 002 704 A1 und der DE 10 2005 063 193 A1 bekannt.

In der DE 203 10 903 U1 und der DE 87 17 574 U1 werden ferner optoelektronische Elemente zur Positions- bzw. Objekterkennung bei Fördersystemen eingesetzt.

Die DE 32 08 901 A1 offenbart ferner ein Verfahren und eine Vorrichtung zur Verhinderung von Unfällen zwischen einer verfahrbaren Arbeitsmaschine und einer oder mehreren sich in ihrem Bewegungsbereich befindlichen Personen, wobei das Unterschreiten eines Mindestabstandes mittels Sender und Empfänger festgestellt wird und durch Auslösung eines Steuersignals die Fahr- und/oder Arbeitsbewegung der Arbeitsmaschine unterbrochen wird.

Die DE 295 20 515 U1 beschreibt ein Transportsystem bei dem der Wagen zur Erkennung der Führungsbahn eine CCD-Kamera aufweist. Schließlich befasst sich die DE 2 01 20 700 U1 mit einem Flaschenumsetzer, der eine Überwachungseinrichtung mit Kamerasystem und Bildauswertung umfasst.

Der Erfindung liegt die Aufgabe zugrunde, ein Laborsystem zu schaffen, dass ein paralleles Arbeiten von Mensch und Maschine ermöglicht, ohne dass aufwendige Sicherheitsabschrankungen erforderlich sind.

Erfmdungsgemäß wird diese Aufgabe durch die Merkmale des Anspruches 1 gelöst.

Das erfindungsgemäße Laborsystem besteht im Wesentlichen aus einer oder mehreren Transporteinrichtung(en) für Proben, wenigstens zwei Behandlungseinrichtungen zur Aufbereitung, Analyse und oder Bearbeitung von Proben, wenigstens einem verfahrbaren Handhabungsgerät für das Handling der Proben im Bereich einer Behandlungseinrichtung, wobei das Handhabungsgerät für den Transfer der Probe zwischen Transporteinrichtung und Behandlungseinrichtung ausgelegt ist sowie einem mit dem Handhabungsgerät mitfahrenden Überwachungssystem zur Einhaltung eines Sicherheitsabstandes. Das Handhabungsgerät ist auf der Transporteinrichtung montiert und mit dieser zwischen wenigstens zwei Behandlungseinrichtungen verfahrbar, und bei dem Überwachungssystem handelt es sich um ein mit dem Handhabungsgerät mitfahrendes Überwachungssystem, das durch eine Kamera zur Erzeugung von Entfernungsbildern und/oder ein Ortungssystem mit wenigstens einem Sender und wenigstens einem Empfänger gebildet wird. Der Empfänger des Ortungssystems wird an der verfahrbaren Transporteinrichtung montiert und ist derart ausgebildet, dass er ein Alarmsignal erzeugt, wenn der wenigstens eine von Laborpersonal zu tragende Sender einen Mindestabstand zum Empfänger unterschreitet. Die Kamera wird an das Handhabungsgerät oder ebenfalls an der Transporteinrichtung befestigt. Das Überwachungssystem wird eingesetzt, wenn von dem auf der verfahrbaren Transporteinrichtung montierten Handhabungsgerät Gefährdungspotential für Menschen ausgeht.

Durch das Überwachungssystem, das vorzugsweise sowohl die Kamera als auch das Ortungssystem umfasst, ist ein paralleles Arbeiten von Mensch und Maschine in relativer Nähe zueinander möglich, ohne dass aufwendige Sicherheitsabschrankungen erforderlich sind, welche die Bewegungsfreiheit einschränken.

Weitere Ausgestaltungen der Erfindung sind Gegenstand der Unteransprüche.

Gemäß einer weiteren Ausgestaltung der Erfindung umfasst das Überwachungssystem weiterhin eine Strom- und/oder Leistungsüberwachungseinrichtung, welche Strom- und/oder Leistungswerte des Handhabungsgerätes überwacht.

Neben den verfahrbaren Handhabungseinrichtungen ist außerdem denkbar, dass auch wenigstens eine Behandlungseinrichtung verfahrbar ausgebildet ist, wodurch die Flexibilität des Laborsystems weiter erhöht werden kann.

Unter dem Begriff Probe ist ein Probenträger zu verstehen, der beispielsweise einen Becher mit Probenmaterial, einen Stahlring mit eingepresstem Probenmaterial, leere Becher, leere Stahlringe und diverse Behälter unterschiedlicher Größe für Probenmaterial umfasst. Das Probenmaterial wird beispielsweise lose in Bechern oder Behältern transportiert wird. Es ist aber auch denkbar, dass das Probenmaterial nach geeigneter Aufbereitung in einen Stahlring gepresst wird.

Das Handhabungsgerät kann auch so ausgelegt werden, dass es die Dosierung des Probenmaterials aus dem Probenträger, insbesondere dem Becher, an einer Behandlungseinrichtung vornehmen kann.

Die Transporteinrichtungen können wahlweise frei fahrend oder auf einer vorgegebenen Transportstrecke, insbesondere einen Schienenweg, von einem Ort zum anderen gelangen.

Die Transportstrecken können in unterschiedlichen Räumen und/oder auf verschiedenen Ebenen verlaufen und sind beliebig miteinander koppelbar. Gemäß einer besonderen Ausgestaltung ist das Handhabungsgerät zusammen mit ein oder mehreren Proben auf der Transporteinrichtung verfahrbar. Dabei kann auch vorgesehen werden, dass es zusätzlich auch eine oder mehrere Transporteinrichtungen gibt, die lediglich eine oder mehrere Proben transportieren.

Gemäß einer bevorzugten Ausführungsform weisen die Transporteinrichtungen eine eigene Energieversorgung, insbesondere ein Niedervolt-System auf und können selbstfahrend ausgebildet sein. Zudem kann die Transporteinrichtung das zu tragende Handhabungsgerät oder die Behandlungseinrichtung mit Energie versorgen.

Zweckmäßigerweise ist die Transportstrecke modulartig aufgebaut und kann in beliebiger Art und Weise einfach ergänzt werden. Hierfür müssen (abgesehen von den Schienen) keine weiteren elektrischen Komponenten installiert werden. Gemäß einer weiteren Ausgestaltung der Erfindung umfasst das Transportsystem wenigstens eine erste und eine in vertikaler Richtung versetzt angeordnete zweite Transportstrecke, wobei zwischen der ersten und zweiten Transportstrecke eine Hebevorrichtung für die Transporteinrichtungen vorgesehen ist. Auf diese Weise können die Behandlungseinrichtungen auf unterschiedlichen Ebenen bzw. Etagen angeordnet werden. Es können auch mehrere Strecken parallel laufen und beliebig kombiniert werden.

Weitere Vorteile und Ausgestaltungen der Erfindung werden im Folgenden anhand der Beschreibung und der Zeichnung näher erläutert.

In der Zeichnung zeigen
- Fig. 1: ein schematisches Blockschaltbild des Laborsystems,
- Fig. 2a-2c: schematische Darstellungen verschiedener Ausführungen der Transporteinrichtungen (Shuttle),
- Fig. 3: schematische Darstellung einer Transporteinrichtung mit Handhabungsgerät und Überwachungseinrichtung mit Kamera,
- Fig. 4: schematische Darstellung der Überwachungseinrichtung mit Kamera
- Fig. 5: schematische Darstellung des Ortungssystems und
- Fig. 6: schematische Darstellung einer Positioniereinheit und einer Ladestation.

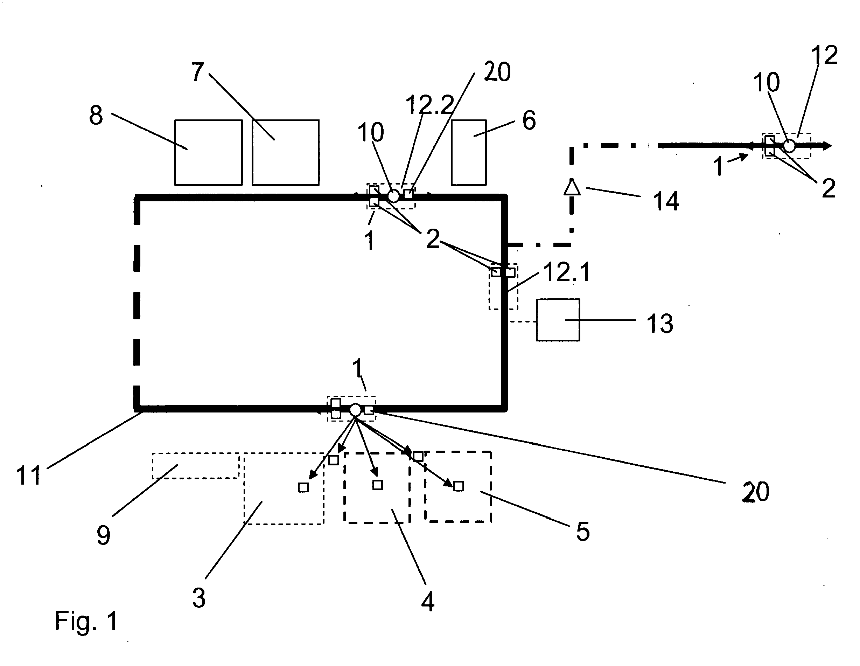

Das in Fig. 1 dargestellte Laborsystem besteht im Wesentlichen aus einer Transporteinrichtung 1 für Proben 2, mehreren Behandlungseinrichtungen 3 bis 9 und wenigstens einem Handhabungsgerät 10 für das Handling der Proben 2 im Bereich einer Behandlungseinrichtung.

Unter dem Begriff Probe ist ein Probenträger zu verstehen, der beispielsweise einen Becher mit Probenmaterial, einen Stahlring mit eingepresstem Probenmaterial, leere Becher, leere Stahlringe, diverse Behälter unterschiedlicher Größe für Probenmaterial umfasst. Das Probenmaterial wird beispielsweise lose in Bechern oder Behältern transportiert wird. Es ist aber auch denkbar, dass das Probenmaterial nach geeigneter Aufbereitung in einen Stahlring gepresst wird.

Die Transporteinrichtungen (beispielsweise ein Shuttle) sind entweder frei fahrend ausgebildet oder sind längs einer Transportstrecke 11, insbesondere einem Schienenweg verfahrbar.

Das Handhabungsgerät 10 kann entweder auf der Transportstrecke 11 oder einer zweiten Transportstrecke zwischen wenigstens zwei der Behandlungseinrichtungen 3 - 9 verfahren werden. Im dargestellten Ausführungsbeispiel ist das Handhabungsgerät 10 zusammen mit ein oder mehreren Proben 2 auf der Transporteinrichtung verfahrbar.

Das Handhabungsgerät 10 ist für den Transfer der Probe 2 zwischen der Transporteinrichtung 1 und einer der Behandlungseinrichtungen 3 bis 9 ausgelegt. Das Handhabungsgerät 10 kann beispielsweise aus einem entsprechend ausgebildeten Greifarm 15 bestehen, der die Probe bzw. den Probenträger mit dem Probenmaterial aufnehmen kann und ggf. auch eine Dosierung des Probenmaterials aus dem Probenträger im Bereich einer Behandlungseinrichtung vornehmen kann. Die Dosierung kann dabei durch langsames Auskippen des Probenmaterials erfolgen. Zur Verbesserung des Fließverhaltens des Probenmaterials könnten zusätzlich noch Mittel vorgesehen werden, die den Greifer 15f des Handhabungsgerätes 10 bzw. des Greifarms 15 mit einer hochfrequenten Vibration anregen.

Gemäß einem bevorzugten Ausführungsbeispiel ist das Laborsystem zur Aufbereitung, Analyse und/oder Bearbeitung von Proben der Zementproduktion und/oder der Erz- und Mineralienaufbereitung ausgebildet. In diesem Fall handelt es sich bei den Behandlungseinrichtungen 3 bis 9 beispielsweise um eine Rohrpostempfangsstation 3, eine Mühle/Presse 4, 5, eine Feinheitsmesseinrichtung 6, ein Spektrometer 7, ein Diffraktometer 8 und eine Rückstellung 9.

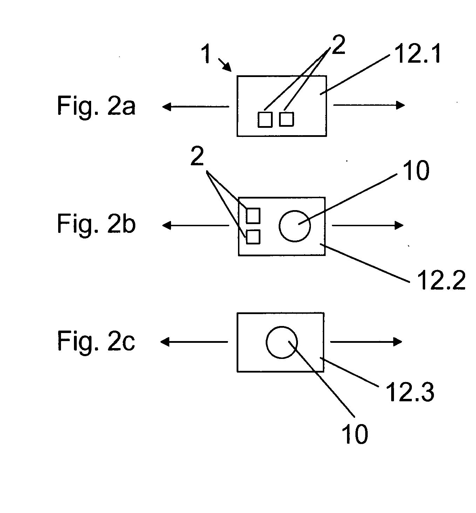

Anhand der Fig. 2a-2c werden nun verschiedene Ausgestaltungen der Transporteinrichtungen (Shuttle) dargestellt. Die in Fig. 2a dargestellte Transporteinrichtung 1 (12.1) ist als reines Transportshuttle für ein oder mehrere Proben 2 ausgelegt. Die in Fig. 2b gezeigte Transporteinrichtung 12.2 dient neben dem Transport der Proben 2 auch dem Transport eines Handhabungsgerätes 10. Die Transporteinrichtung 12.3 gemäß Fig. 2c ist schließlich als reines Handhabungs-Shuttle ausgebildet und trägt lediglich ein Handhabungsgerät 10.

Gemäß einer weiteren Ausgestaltung der Erfindung weisen die Transporteinrichtungen 1 eine eigene Energieversorgung, insbesondere ein Niedervolt-System auf. Damit können die Transporteinrichtungen beispielsweise auch selbstfahrend ausgebildet werden. Zudem kann die Transporteinrichtung ein Handhabungsgerät oder eine Behandlungseinrichtung (montiert auf der Transporteinrichtung) mit Energie versorgen.

Die Stromversorgung der Transporteinrichtungen und des Handhabungsgeräts bzw. der Behandlungseinrichtung kann aber auch über die Transportstrecke (z.B. Schiene) erfolgen.

Die Transportstrecke für die Transporteinrichtungen kann als Schienenweg ausgebildet sein, wobei sie dann zweckmäßigerweise modulartig aufgebaut ist, sodass sie in beliebiger Form und Ausdehnung ausgebildet werden kann.

Um eine noch größere Flexibilität der Streckenführung zu erreichen, könnte eine erste und eine in vertikaler Richtung versetzt angeordnete zweite Transportstrecke vorgesehen werden, wobei zwischen der ersten und der zweiten Transportstrecke eine Hebevorrichtung 14 für die Transporteinrichtungen vorgesehen ist (Fig. 1). Verbindungen von Strecken auf unterschiedlichen Ebenen sind somit realisierbar.

Selbstverständlich sind im Rahmen der Erfindung auch beliebig andere Ausbaustufen der Transportstrecke denkbar und können an die jeweiligen Laborbedingungen angepasst werden. Mit dem obigen Konzept ist eine freie Raumgestaltung möglich, da die Behandlungseinrichtungen nahezu beliebig im Raum aufgestellt werden können.

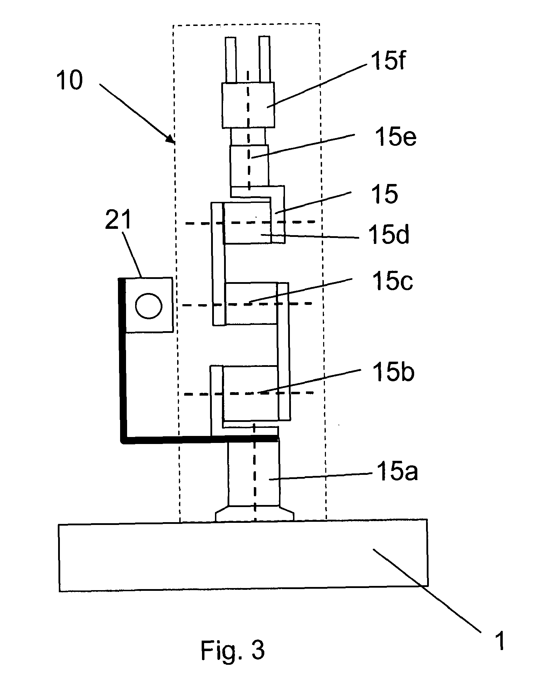

Fig.3 zeigt ein auf einer Transporteinrichtung 1 montiertes und damit verfahrbares Handhabungsgerät 10. Das Handhabungsgerät wird hier beispielhaft durch einen speziellen Greifarm 15 gebildet. Desweiteren wird hier eine an den Greifarm befestigte Kamera 21 zur Erzeugung von Entfernungsbildern gezeigt. Die Kamera 21 kann aber auch an die verfahrbare Transporteinrichtung montiert werden

Der Greifarm 15 ist hier als skalierbarer Leichtbauarm ausgebildet und weist mehrere Dreh- und Schwenkeinheiten 15a, 15b, 15c, 15d und 15e auf, durch die rekonfigurierbare, modulare Roboterstrukturen realisiert werden können. Hinzu kommt noch ein elektrischer Greifer 15f. Die einzelnen Antriebsmodule (Greifer und Dreh-/Schwenkeinheiten) können mit Verbindungsteilen frei und flexibel zu einem individuellen Leichtbauarm in der IP65-Schutzklasse montiert werden.

Der Aktionsradius ist durch freie Wahl der kinematischen Struktur an die Applikation anpassbar. Die Dreh- und Schwenkeinheiten werden beispielsweise von bürstenlosen Servomotoren mit Harmonic-Drive-Getriebe bewegt und weisen bereits eine komplette Leistungs- und Steuerelektronik auf, die Positionierfahrten mit Rampensteuerung sowie eine Endlagen-, Spannungs-, Strom- und Temperaturüberwachung ermöglicht. Durch den Einsatz leichter und gleichzeitig hochstabiler Materialien erreichen die kompakten Schwenkeinheiten ein Eigenmasse-Traglast-Verhältnis, das besser ist als 2:1 ist. Die Spannungsversorgung, die Ansteuerungsmöglichkeiten und die universellen Kommunikations-Schnittstellen können bereits integriert sein, sodass zur Antriebsvernetzung lediglich ein Kabel erforderlich ist.

Da die Antriebskomponenten mit Hohlwellen ausgestattet sind, kann die Verkabelung innen liegend und damit geschützt geführt werden. Die 24V Gleichspannung ist für den Betrieb des Leichtbauarms ausreichend. Der geringe Energiebedarf des Leichtbauarms wird zweckmäßigerweise vom Bordnetz der Transporteinrichtung gedeckt. Die Steuerung des Leichtbauarms erfolgt beispielsweise über einen Embedded Controller auf Basis eines Einplatinen-PC's. Eine spezielle Robotersteuerung (bekannt von Industrierobotern) ist somit nicht erforderlich.

Die Transporteinrichtung 1 (Aufbau mit Handhabungsgerät 10) weist außerdem eine Überwachungseinrichtung 20 auf, die im Ausführungsbeispiel gemäß Fig. 3 durch eine Kamera 21 zur Erzeugung von Entfernungsbildern gebildet wird.

Bei der Kamera 21 kann es sich beispielsweise um eine sogenannte TOF-Kamera (Time-of-Flight-Kamera) handeln. Das TOF-Prinzip basiert auf der Messung der Lichtlaufzeit. Man sendet einen Lichtimpuls aus und misst die Zeit, die das Licht benötigt, um von einem Objekt reflektiert wieder zurückzukehren. Auf diese Weise kann zu jedem Pixel der Abstand zu einem Objekt ermittelt werden, sodass man eine dreidimensionale Struktur der Szene erhält.

Die Behandlungsstationen werden von der Transporteinrichtung angefahren, wobei die nähere Umgebung der jeweiligen Behandlungsstation von der Kamera bildlich erfasst und ein Muster generiert wird. Die Bildaufnahme erfolgt an jeder Behandlungsstation, sodass die Arbeitsumgebungen für das Handhabungsgerät aufgenommen und erlernt werden. Die jeweilige Bildaufnahme erfolgt zunächst ohne Eingriffe an den Geräten durch Bedienpersonal (so genannte statische Bildaufnahme).

Die Kamera kann zur Aufnahme der vollständigen Umgebung auch verfahren werden. Ist die Kamera an dem Handhabungsgerät befestigt, wird sie automatisch in Arbeitsrichtung des Handhabungsgeräts ausgerichtet.

Im Automatikbetrieb werden die Behandlungsstationen beliebig von den Transporteinrichtungen angefahren. Zudem darf das Laborpersonal im gleichen Raum mit den Behandlungsstationen arbeiten. Für den manuellen Zugriff auf die Behandlungsstationen werden die Geräte in der Regel in den Service- oder Manual-Mode geschaltet. Da nicht ausgeschlossen werden kann, dass das Personal auch in den Arbeitsraum der Handhabungseinheit greift oder sich dort befindet, wird dieser Arbeitsraum über die Kamera überwacht. Vor und während der Durchführung der Handhabungsaufgaben durch das Handhabungsgerät werden ausreichend schnell neue Bildinformationen generiert und mit dem aufgenommenen statischen Bild verglichen. Abweichungen von den ursprünglichen Bildern z.B. bei Eintritt von Personen in den Überwachungsbereich werden ausreichend schnell erkannt und führen zur Abschaltung des Handhabungsgerätes.

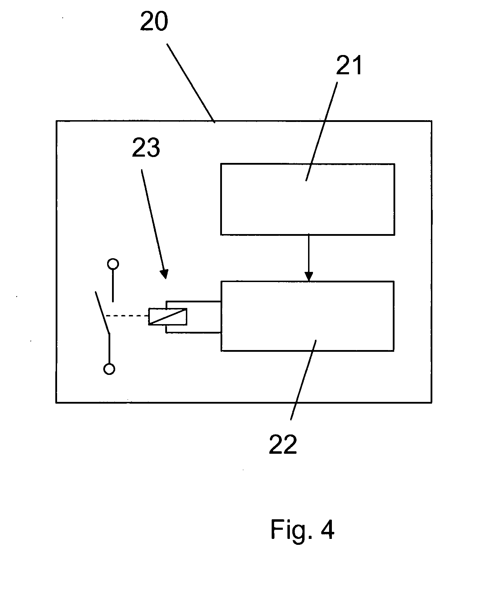

Hierfür weist die Überwachungseinrichtung 20 gemäß Fig. 4 neben der Kamera 21 eine Auswertungsschaltung 22 auf, die mit einem Abschaltschaltkreis 23 zusammenwirkt, um das Handhabungsgerät 10 abzuschalten, wenn ein vorgegebener Sicherheitsabstand unterschritten wird.

Es können somit Personen, die im Arbeitsbereicht des Handhabungsgeräts oder auf der Verfahrstrecke der Transporteinrichtung rechtzeitig detektiert werden. Durch das speziell implementierte Auswerteverfahren (Differenzbildanalyse) werden Unterschreitungen des Sicherheitsabstandes schnell erkannt und Bewegungen des Handhabungsgerätes sicherheitstechnisch unterbunden. Zudem können unterschiedliche Sicherheitszonen eingerichtet werden, so dass bei Annäherung von Personen zunächst nur die Geschwindigkeit des Handhabungsgeräts reduziert werden kann. Die Warn- und Schutzfelder sind flexible konfigurierbar.

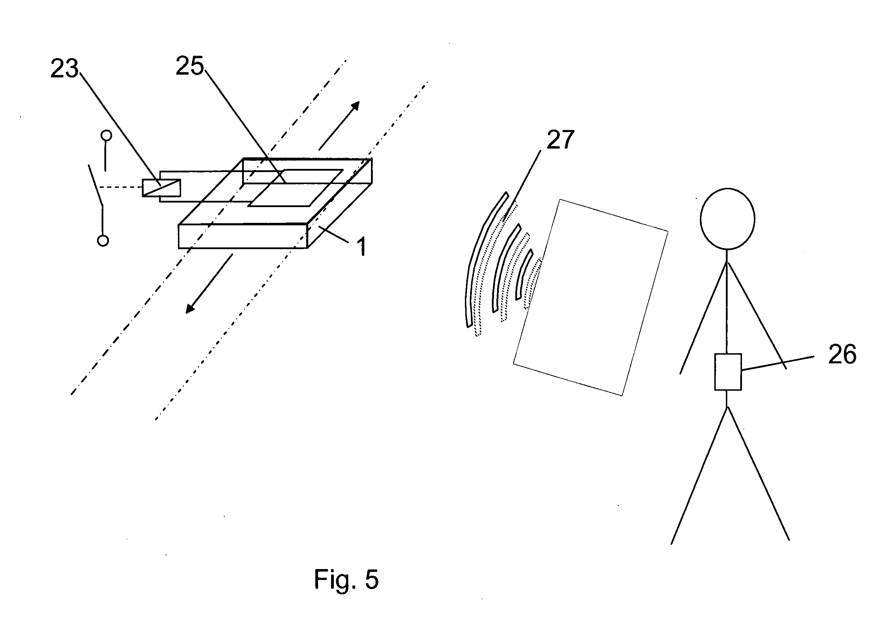

Um die Anforderungen einer Zusammenarbeit von Mensch und Maschine ohne Sicherheitsabtrennungen / Schutzzaun zu erfüllen kann statt oder zusätzlich zur Überwachungseinrichtung 20 mit Kamera auch ein Ortungssystem mit wenigstens einem Sender und wenigstens einem Empfänger vorgesehen werden (siehe Fig. 5 ). Hierbei ist an der verfahrbaren Transporteinrichtung 1 ein Empfänger 25 befestigt und derart ausgebildet, dass er ein Alarmsignal erzeugt, wenn wenigstens ein Sender 26 einen Mindestabstand zum Empfänger unterschreitet.

Das Ortungssystem sieht vor, dass das Laborpersonal die Sender 26 trägt, die bei Annäherung an den am Handhabungsgerät bzw. an der Transporteinrichtung angebrachten Empfänger 25 ein Alarmsignal auslösen und über einen Abschaltschaltkreis 23 das Handhabungsgerät 10 sicherheitstechnisch stromlos schalten. Der zu überwachende Bereich ist beliebig einstellbar und kann z.B. 1 m um den Empfänger betragen. Das Tragen der Sender 26 für das Laborpersonal ist Pflicht und kann über eine weitere Empfangseinheit im Bereich des Eingangs überwacht werden (Zutrittskontrolle). Diese optionale Zutrittskontrolle überwacht das Tragen der Sender durch das Personal beim Passieren von Türen zum Labor oder Laborgebäude und löst ggf. einen Alarm aus Zudem ist eine Kopplung mit einer automatischen Türverriegelung möglich.

Die 3D-Ortung basiert beispielsweise auf Mikrowellenentfernungsmessungen oder auf Messungen der Laufzeitunterschiede eines Funksignals 27 zu verschiedenen Empfängern. Im Vergleich zum Einsatz von Videosystemen ist bei dieser Technik kein Sichtkontakt zu den zu beobachtenden Objekten oder Personen notwendig.

Gemäß einer weiteren Ausgestaltung kann das Überwachungssystem eine Strom-und/oder Leistungsüberwachungseinrichtung umfassen, welche Strom- und/oder Leistungswerte des Handhabungsgerätes 10 überwacht. Dabei werden insbesondere die Antriebsströme oder die Gesamtleistung des Handhabungsgeräts überwacht und ausgewertet. Die Strom/-Leistungswerte liegen redundant vor, bei Nichteinhaltung der Grenzwerte werden die Antriebe sicherheitstechnisch stromlos geschaltet. Die Energie der Handhabungseinheit kann so beispielsweise auf 80W begrenzt werden. Die Einhaltung der Grenzwerte wird auf diese Weise sicherheitstechnisch überwacht.

Mindestens eine der drei oben beschriebenen Überwachungseinrichtungen kommt bei dem Laborsystem zum Einsatz, sodass eine indirekte Zusammenarbeit bzw. paralleles Arbeiten von Mensch und Maschine ohne die herkömmlichen Schutz-/Sicherheitsabschrankungen möglich ist. Werden mehrere verschiedene Überwachungseinrichtungen vorgesehen, kann die Sicherheit weiter erhöht werden.

Eine indirekte Zusammenarbeit bedeutet, dass das Laborpersonal im gleichen Raum arbeiten darf, wo auch die automatische Prozesse inklusive der automatischen Handhabung ablaufen. Verschiedene Behandlungsstationen sind in den automatischen Prozess eingebunden, stehen aber auch für die manuelle Bedienung zur Verfügung. Es besteht nunmehr die Möglichkeit, zur beliebigen Zeit Bedienstationen manuell zu bedienen, während zur gleichen Zeit benachbarte Stationen in den automatischen Prozess eingebunden sind.

Sobald sich das Laborpersonal dem Gefährdungspunkt "automatische Handhabung" annähert bzw. in den Arbeitsraum des Handhabungsgeräts gelangt bzw. greift, wird die automatische Handhabung gestoppt. Hierbei werden sämtliche sicherheitstechnischen Aspekte berücksichtigt.

Dabei ist der Arbeitsraum des Handhabungsgerätes nicht ortsgebunden, die Überwachung des Arbeitsraumes muss daher dynamisch sein. Die Überwachung wird somit an die Transporteinrichtung gekoppelt. Ausgehend von der Transporteinrichtung wird die nähere Umgebung sicherheitstechnisch überwacht. Die nähere Umgebung ist dabei an die max. Reichweite der Handhabungseinheit gekoppelt, entsprechend wird der Überwachungsbereich eingestellt.

Die Einrichtung der Sicherheitszonen bzw. der gesicherten Arbeitsbereiche erfordert weder aufwendige Installationen noch eine aufwendige Inbetriebnahme. Der Automatisierungsaufwand ist ebenfalls gering. Anders als bei den derzeit eingesetzten 2D-Scannern oder des Pilz Safety Eyes ist der Aufwand für die Einrichtung der Sicherheitszonen somit gering. Mit dem Ortungssystem ist auch die Überwachung von Bereichen, die optisch nicht detektiert werden können, möglich (Person kommt z.B. aus einer so genannten toten Zone, da Arbeitsbereich durch zu bedienendes Gerät zugestellt ist).

Das Laborpersonal kann sich sicher und frei im Raum bewegen und alle Geräte sind leicht erreichbar (keine Abschrankungen, keine Barrieren). Alle marktgängigen Labor-Behandlungsstationen können an beliebiger Stelle frei im Raum aufgestellt werden und müssen nicht mit Sicherheitsabschrankungen gesichert werden.

Darüber hinaus besteht die Möglichkeit, dass an ein oder mehreren Behandlungseinrichtungen wahlweise oder simultan eine manuelle und/oder automatische Handhabung (Transport und/oder Handling der Proben) möglich ist. Dabei sind die Transporteinrichtung und das Handling der Proben mit dem Handhabungsgerät zweckmäßigerweise auf der einen Seite und die Bedienerseite auf der anderen Seite der Behandlungseinrichtung vorgesehen.

Die manuelle Handhabung kann beispielsweise darin bestehen, dass das Laborpersonal die Arbeit des Handhabungsgerätes, beispielsweise den Transfer von einer Transporteinrichtung in die Behandlungseinrichtung, übernimmt. Es ist aber auch denkbar, dass selbst der Transport einer Probe zur Behandlungseinrichtung vom Bediener/Mensch durchgeführt wird. Die manuelle Handhabung wird vor allem dadurch ermöglicht, dass das System keine Sicherheitsabschrankungen, wie Schutztüren, erfordert.

In einer weiteren Ausgestaltung der Erfindung zeichnet sich das Laborsystem durch eine erweiterbare bedarforientierte Gerätelogistik aus, wobei ein oder mehrere Behandlungseinrichtungen verfahrbar ausgebildet sind und dort hintransportiert werden, wo sie gerade benötigt werden. Es gibt somit folgende Möglichkeiten:
a) Handhabungsgerät auf einer Transporteinrichtung fährt zu einer Behandlungseinrichtung;
b) Proben werden zu einer stationären Behandlungseinrichtung, zu einem verfahrbaren Handhabungsgerät oder zum Bediener transportiert;
c) Behandlungseinrichtungen fahren zu einem Bediener oder zu einem stationären oder verfahrbaren Handhabungsgerät.

Mobile Behandlungseinrichtungen können z.B. spezielle Dosiersysteme, Probenteiler o.a. Geräte sein, die auf einer Transporteinrichtung montiert sind. Die Behandlungseinrichtungen auf der Transporteinrichtung werden wie das Handhabungsgerät von dem Embedded Controller gesteuert.

Hierdurch kann der Arbeitsfluss im Labor durch die Wegereduktion weiter optimiert werden. Ist z.B. einen verfahrbares Handhabungsgerät durch hohes Probenaufkommen an ein oder mehreren Behandlungseinrichtungen gebunden, kann die verfahrbare Behandlungseinrichtung auch in den Arbeitsbereich des verfahrbaren Handhabungsgeräts fahren und bedient werden. Zudem können verfahrbare/mobile Behandlungseinrichtungen hinzugezogen werden, um den Probenfluss an beliebiger Stelle zu verbessern oder zu beschleunigen. Des Weiteren können die mobilen Behandlungseinrichtungen auch stationäre Handhabungsgeräte anfahren.

Die mobilen Behandlungseinheiten werden als mobile Hardware-Serviceeinheiten betrachtet. Die mobilen Hardware-Serviceeinheiten können lokal in bestimmter Umgebung agieren und eingesetzt werden, aber auch von anderen Automationszellen angefordert werden. Somit können verschiedene Automationszellen auf gleiche Ressourcen (Hardware-Service) zugreifen und diese je nach Auslastung bedarfsgerecht nutzen. Jeder Automationszelle (eine Automationszelle kann aus einer oder mehreren Behandlungseinrichtungen bestehen oder ein komplexer Automat sein) sind die nutzbaren Ressourcen bekannt und können von dieser angefordert werden. Somit kann eine Automationszelle dynamisch bei Bedarf erweitert werden. Die Kopplung von neuen oder vorhandenen Automaten mit einem frei konfigurierbaren System ist zudem möglich.

Die mobilen Einheiten werden nicht zwingend einer Automationszelle zugeordnet. Die mobile Einheit stellt sich und damit ihren Service (Hardware-Service) zur Verfügung. Jede mobile Einheit ist autark und kann in ihrer Art vielfach vorhanden sein, dabei ist jede eigenständige Einheit mit dem Embedded Controller ausgestattet. Dieser ermöglicht die datentechnische Laborvernetzung, integriert sich automatisch in die vorhandene Umgebung (macht sich bekannt) und steuert die jeweilige mitgeführte Behandlungseinrichtung oder das Handhabungsgerät.

Das System sieht somit neben den stationären Behandlungseinrichtungen, die von einem mobilen Handhabungsgerät angefahren und bedient werden noch variable und verfahrbare Behandlungseinrichtungen vor, die beliebig nutzbar sind und das System dynamisch erweitern können.

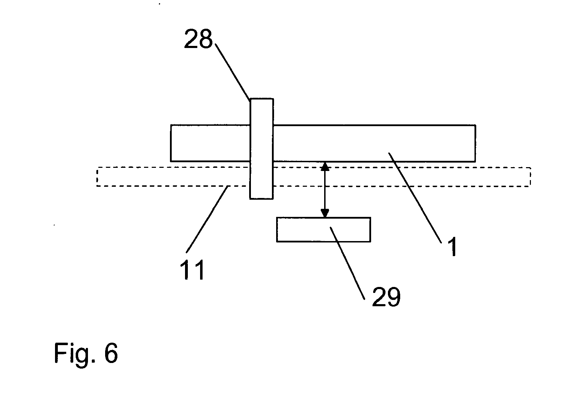

In einer weiteren Ausgestaltung der Erfindung (Fig. 6) weist das Transportsystem entlang seiner Transportstrecke 11 ein oder mehrere Positioniereinheiten 28 auf, an den die Transporteinrichtungen punktgenau angehalten werden können. Die Positioniereinheiten sind vor allem im Bereich der Behandlungseinrichtungen und Hebevorrichtungen vorgesehen, um ein exaktes Handling der Proben bzw. der Transporteinrichtungen zu gewährleisten.

Weiterhin können Ladestationen 29 vorgesehen werden, an denen die Energieversorgung (insbesondere Leistungskondensatoren oder Akkus) der Transporteinrichtungen aufgeladen werden können.

Die Transportstrecke stellt die logische Verbindung zwischen einzelnen Behandlungseinrichtungen (Aufbereitung, Analysator, etc.) oder Automationszellen (z.B. Laborautomat) her. Diese Transportstrecke wird nach Regeln aufgebaut, welche die einzelnen Prozesse unterstützen und/oder die Behandlungseinrichtungen bzw. Automationszellen z.B. mit Proben versorgen.

Die Transporteinrichtungen können zudem einen beschreibbaren Informationsspeicher für die Art der Proben und/oder die anzufahrenden Behandlungseinrichtungen aufweisen.

Die Information über die als nächstes anzufahrende Behandlungseinrichtung erhält die Transporteinrichtung von dem mitfahrenden Embedded Controller. Eine externe Steuerung 13 verwaltet alle möglichen Aufträge und ist für die Probenlogistik im Labor verantwortlich. De Kommunikation der Steuerung 13 mit dem Embedded Controller erfolgt über eine Funkverbindung (WLAN, Bluetooth). Die beim Embedded Controller eingehenden Aufträge werden hier über einen eingebetteten Protokollhandler ausgewertet und an die Transporteinrichtung oder an das Handhabungsgerät weitergeleitet. Der Embedded Controller gibt neue Routeninformationen an die Transporteinrichtung weiter und gibt schließlich auch die Freigabe zur Weiterfahrt. Der Embedded Controller steuert auch das Handhabungsgerät. Die hinterlegten Bewegungsprogramme für das Handhabungsgerät werden über die externe Steuerung 13 ausgelöst. Die externe Steuerung kennt auch den jeweiligen Betriebszustand der Behandlungseinrichtung und berücksichtigt diesen bei der Interaktion von Handhabungsgerät und Behandlungseinrichtung sowie bei Ermittlung der optimalen Route für die Transporteinrichtung.

## Patentansprüche

1. Laborsystem mit einer oder mehreren Transporteinrichtung(en) (1) für Proben (2), wenigstens zwei Behandlungseinrichtungen (3-9) zur Aufbereitung, Analyse und/oder Bearbeitung von Proben, wenigstens einem Handhabungsgerät (10) für das Handling der Proben im Bereich einer Behandlungseinrichtung, wobei das Handhabungsgerät (10) für den Transfer der Probe (2) zwischen Transporteinrichtung (1) und Behandlungseinrichtung (3-9) ausgelegt ist sowie einem Überwachungssystem (30) zur Einhaltung eines Sicherheitsabstandes,
**dadurch gekennzeichnet, dass** das Handhabungsgerät (10) auf der Transporteinrichtung montiert und mit dieser zwischen wenigstens zwei Behandlungseinrichtungen (3-9) verfahrbar ist, und dass es sich um ein mit dem Handhabungsgerät (10) mitfahrendes Überwachungssystem (30) handelt, das eine Überwachungseinrichtung (20) mit Kamera (21) zur Erzeugung von Entfernungsbildern und/oder ein Ortungssystem mit wenigstens einem von Laborpersonal zu tragenden Sender (26) und wenigstens einem Empfänger (25) umfasst, wobei der Empfänger an der verfahrbaren Transporteinrichtung montiert und derart ausgebildet ist, dass er ein Alarmsignal erzeugt, wenn der wenigstens eine Sender einen Mindestabstand zum Empfänger unterschreitet.

2. Laborsystem nach Anspruch 1, **dadurch gekennzeichnet, dass** das Überwachungssystem (30) weiterhin eine Strom- und/oder Leistungsüberwachungseinrichtung umfasst, welche Strom- und/oder Leistungswerte des Handhabungsgerätes (10) überwacht.

3. Laborsystem nach Anspruch 1, **dadurch gekennzeichnet, dass** wenigstens eine Behandlungseinrichtung verfahrbar ausgebildet ist.

4. Laborsystem nach Anspruch 1, **dadurch gekennzeichnet, dass** das Handhabungsgerät (10) zusammen mit einer oder mehreren Proben (2) auf der Transporteinrichtung (1) verfahrbar ist.

5. Laborsystem nach Anspruch 1, **dadurch gekennzeichnet, dass** weiterhin eine oder mehrere Transporteinrichtungen (12.2) vorgesehen sind, die lediglich eine oder mehrere Proben (2) transportieren.

6. Laborsystem nach Anspruch 4, **dadurch gekennzeichnet, dass** die Transporteinrichtung (1) selbstfahrend ausgebildet ist.

7. Laborsystem nach Anspruch 1, **dadurch gekennzeichnet, dass** das Laborsystem zur Aufbereitung, Analyse und/oder Bearbeitung von Proben der Zementproduktion und/oder der Erz- und Mineralienaufbereitung ausgebildet ist, wobei wenigstens einige der folgenden Behandlungseinrichtungen (3-9) vorgesehen sind: Rohrpostempfang, Mühle, Presse, Feinheitsmesseinrichtung, Spektrometer und Diffraktometer.

## Claims

1. Laboratory system having one or more transport device(s) (1) for samples (2), at least two treatment devices (3-9) for preparation, analysis and/or processing of samples, at least one handling device (10) for handling the samples in the region of a treatment device, the handling device (10) being configured for transferring the sample (2) between the transport device (1) and treatment device (3-9) and a monitoring system (30) for maintaining a safe distance, **characterised in that** the handling device (10) is mounted on the transport device and can be displaced therewith between at least two treatment devices (3-9) and **in that** the monitoring system (30) is a monitoring system which travels with the handling device (10) and which comprises a monitoring device (20) with a camera (21) for producing range images and/or a location system having at least one transmitter (26) which is to be worn by the laboratory technician and at least one receiver (25), the receiver being mounted on the movable transport device and constructed in such a manner that it produces an alarm signal when the at least one transmitter falls below a minimum spacing with respect to the receiver.

2. Laboratory system according to claim 1, **characterised in that** the monitoring system (30) further comprises a current and/or power monitoring device which monitors current and/or power values of the handling device (10).

3. Laboratory system according to claim 1, **characterised in that** at least one treatment device is constructed so as to be movable.

4. Laboratory system according to claim 1, **characterised in that** the handling device (10) can be moved together with one or more samples (2) on the transport device (1).

5. Laboratory system according to claim 1, **characterised in that** there are further provided one or more transport device(s) (12.2) which transport only one or more samples (2).

6. Laboratory system according to claim 4, **characterised in that** the transport device (1) is constructed so as to be self-driving.

7. Laboratory system according to claim 1, **characterised in that** the laboratory system is constructed for the preparation, analysis and/or processing of samples for cement production and/or ore and mineral preparation, at least some of the following treatment devices (3-9) being provided: pneumatic post conveyor, mill, press, fineness measuring device, spectrometer and diffractometer.

## Revendications

1. Système de laboratoire, doté d'un ou de plusieurs dispositif(s) de transport (1) d'échantillons (2), deux installations de traitement (3 - 9) pour la préparation, l'analyse et / ou le travail d'échantillons, au moins un appareil de manipulation (10) pour le maniement des échantillons dans le secteur d'une installation de traitement, l'appareil de manipulation (10) étant conçu pour le transfert de l'échantillon (2) d'un dispositif de transport (1) à une installation de traitement (3 - 9), ainsi que d'un système de surveillance (30) pour le respect d'une distance de sécurité, **caractérisé en ce que** l'appareil de manipulation (10) est monté sur le dispositif de transport et peut être déplacé avec celui-ci entre au moins deux dispositifs de traitement (3 - 9), et qu'il s'agit d'un système de surveillance (30), qui, conduit en commun avec l'appareil de manipulation (10), comprend un dispositif de surveillance (20) à caméra (21) pour la prise d'images de distance et / ou d'un système de localisation avec au moins un émetteur (26), porté par le personnel du laboratoire. et au moins un récepteur (25), le récepteur étant monté sur le dispositif de transport mobile et conçu de sorte qu'il génère un signal d'alarme quand la distance entre l'émetteur et le récepteur est inférieure à une distance minimum.

2. Système de laboratoire selon la revendication 1, **caractérisé en ce que** le système de surveillance (30) comprend en outre une installation de surveillance des valeurs de courant et / ou de puissance de l'appareil de manipulation (10).

3. Système de laboratoire selon la revendication 1, **caractérisé en ce qu'**une installation de traitement au moins est de conception mobile.

4. Système de laboratoire selon la revendication 1, **caractérisé en ce que** l'appareil de manipulation (10) peut être déplacé, en commun avec un ou plusieurs échantillons (2), sur le dispositif de transport (1).

5. Système de laboratoire selon la revendication 1, **caractérisé en ce que** sont prévus en outre un ou plusieurs dispositifs de transport (12.2), qui transportent seulement un ou plusieurs échantillons (2).

6. Système de laboratoire selon la revendication 4, **caractérisé en ce que** le dispositif de transport (1) est automoteur.

7. Système de laboratoire selon la revendication 1, **caractérisé en ce que** ledit système de laboratoire est conçu pour la préparation, l'analyse et / ou le traitement d'échantillons dans le domaine de la production de ciment et / ou du traitement de minerais et de minéraux, au moins quelques-uns des dispositifs de traitement (3 - 9) suivants étant prévus : station de réception de poste pneumatique, broyeur, presse, installation de mesure de finesse, spectromètre et diffractomètre.
